# EUROPEAN PATENT APPLICATION

(11) **EP 4 598 004 A1**
(43) Date of publication of application: **06.08.2025**
(21) Application number: 23871962.9
(22) Date of filing: 14.09.2023
(51) Int. Cl.: H04N 5/64

(54) **WEARABLE DEVICE**

(30) Priority: 28.09.2022 JP 2022154902
(71) Applicant: Panasonic Intellectual Property Management Co., Ltd., Kadoma-shi, Osaka 571-0057 (JP)
(72) Inventor: FUJIWARA, Youichi, Kadoma-shi, Osaka 571-0057 (JP); OGAWA, Suguru, Kadoma-shi, Osaka 571-0057 (JP)
(74) Representative: Novagraaf International SA
(86) International application number: PCT/JP2023/033537
(87) International publication number: WO 2024/070729

(57) **Abstract**

This wearable device comprises: a frame member having two covering parts, a support part that movably supports each of the two covering parts, and a part to be worn; and an attachment member. The support part is secured to the frame member, and the attachment member is attached to the frame member so as to have a portion that does not come into contact with at least the frame member at an attachment location.

## Description

### Technical Field

The present disclosure relates to a wearable apparatus.

### Background Art

It has been known that, as described in Patent Literature (hereinafter referred to as "PTL") 1, a wearable apparatus such as a head-mounted display is configured to include: a frame member (member with reference numeral 4) to be worn on the head of a user; and an attachment member provided with an imager, a motion sensor, and the like, which is attached to the frame member (member with reference numeral 7).

### Citation List

### Patent Literature

PTL 1
Japanese Unexamined Patent Application Publication (Translation of PCT Application) No. 2019-516261

### Summary of Invention

However, when an external force is applied to the frame member such as when the wearable apparatus is worn, the external force is transmitted to the attachment member attached to the frame member. Therefore, due to the transmitted external force, a relative positional relationship between the imager and the motion sensor is misaligned, potentially affecting a content of an image visible to the user in the wearable apparatus.

An object of the present disclosure is to provide a wearable apparatus capable of suppressing an effect on a content of an image visible to a user due to an external force transmitted from a frame member.

A wearable apparatus according to the present disclosure includes: a frame member that includes two covers, a supporter, and a wearing part, the two covers being arranged side by side at positions respectively corresponding to eyes of a user, the two covers being provided for displaying an image to the user, the supporter supporting each of the two covers movably in a direction in which the two covers are arranged, the wearing part being worn on a head of the user; and an attachment member to which an imager that images an image and a motion sensor are attached, in which: the supporter is fixed to the frame member, and the attachment member is attached to the frame member such that the attachment member has at least a part that is not in contact with the frame member at an attachment point.

According to the present disclosure, it is possible to suppress an effect on a content of an image visible to a user due to an external force transmitted from a frame member.

### Brief Description of Drawings

FIG. 1 is a perspective view of a wearable apparatus according to an embodiment of the present disclosure;
FIG. 2 illustrates the wearable apparatus according to the present embodiment as viewed from a Z direction;
FIG. 3 illustrates an attachment member of the wearable apparatus according to the present embodiment as viewed from the Z direction;
FIG. 4 is an enlarged view of an opening part of a frame member;
FIG. 5 is a cross-sectional view of the opening part of the frame member;
FIG. 6 is an enlarged view of an imager part in the wearable apparatus;
FIG. 7 is a cross-sectional view of the imager part in the wearable apparatus;
FIG. 8 illustrates an attachment structure in which the attachment member is attached to the frame member;
FIG. 9 is a cross-sectional view of an attachment structure of first through-hole and third through-hole parts;
FIG. 10 is a cross-sectional view of an attachment structure of a second through-hole part;
FIG. 11 is a cross-sectional view of an attachment structure according to a variation; and
FIG. 12 illustrates an attachment structure according to another variation.

### Description of Embodiments

### (Embodiment)

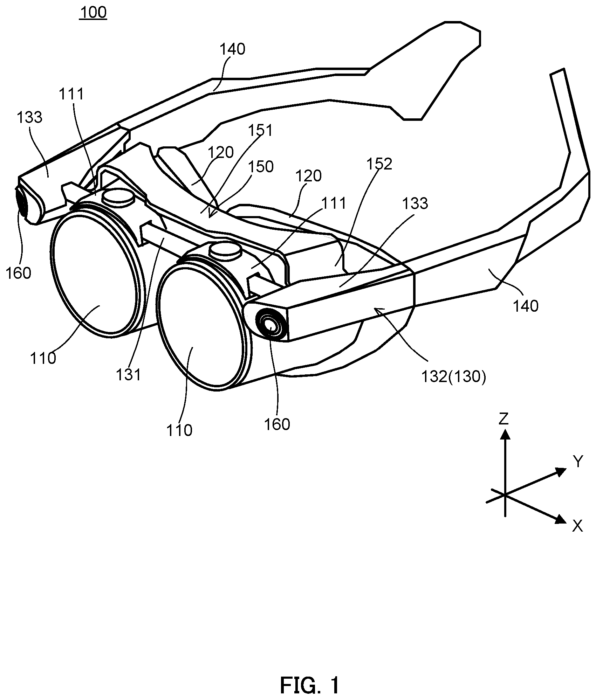

Hereinafter, an embodiment of the present disclosure will be described in detail with reference to the drawings. FIG. 1 is a perspective view of wearable apparatus 100 according to the embodiment of the present disclosure.

As illustrated in FIG. 1, wearable apparatus 100 is, for example, a head-mount display wearable to the head of a user and has a glasses-shaped configuration. Wearable apparatus 100 includes lens barrels 110, eye caps 120, frame members 130, temples 140, and attachment member 150.

Incidentally, an orthogonal coordinate system (X, Y, and Z) is used for the description in FIG. 1 and the like. The same orthogonal coordinate system (X, Y, and Z) is used in the drawings to be mentioned later. For example, an X direction indicates a left-right direction (direction toward left from right), a Y direction indicates a front-rear direction (direction toward rear from front), and a Z direction indicates a vertical direction.

Each lens barrel 110 is a display module placed at a position that covers the eye of the user when the user wears wearable apparatus 100, and two lens barrels 110 are provided side by side in the X direction. Of two lens barrels 110, lens barrel 110 positioned on a negative side in the X direction is a part that covers the right eye of the user, whereas lens barrel 110 positioned on a positive side in the X direction is a part that covers the left eye of the user. Lens barrel 110 corresponds to a "cover" of the present disclosure.

Lens barrel 110 has a bottomed cylindrical shape and includes therein a display for displaying an image, a convex lens for enlarging the image displayed on the display, and the like.

Further, on a positive side in the Z direction of lens barrel 110, supported part 111 supported by a supporter to be described later is provided. Supported part 111 has a hole along the X direction and is supported by the supporter via the hole.

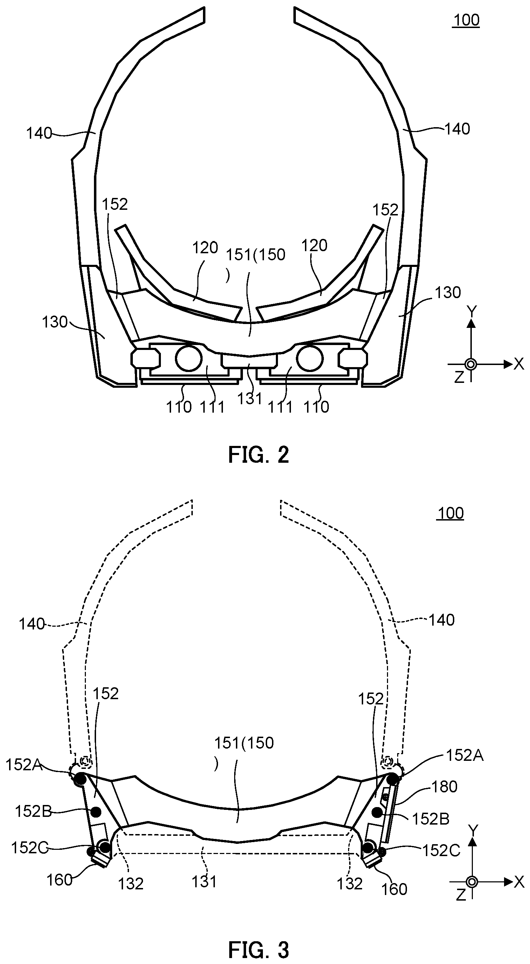

As illustrated in FIG. 2, each eye cap 120 is a member interposed between lens barrel 110 and the head of the user and is attached to lens barrel 110. Eye cap 120 is configured to seal a space between lens barrel 110 and the eye of the user when the user wears wearable apparatus 100.

Frame member 130 is a frame of wearable apparatus 100 and support lens barrels 110 and temples 140. As illustrated in FIG. 1, frame member 130 includes supporter 131, lower parts 132, and upper parts 133.

Supporter 131 is a part that supports two lens barrels 110 and is configured to extend in the X direction. Supporter 131 is passed through the hole of supported part 111 of each lens barrel 110 so as to support lens barrel 110 such that lens barrel 110 is movable in the X direction. This allows a position of lens barrel 110 in the X direction to be adjusted (see also FIG. 2).

Lower part 132 and upper part 133 compose a casing that is placed on a side of each of two lens barrels 110. Lower part 132 is a part to which an end of supporter 131 is fixed and temple 140 is connected. Upper part 133 is attached to cover lower part 132 from a positive side in the Z direction of lower part 132.

As illustrated in FIG. 2, each temple 140 is a part that is worn on the head of a user. Temple 140 is connected to each of lower parts 132 on a side in the X direction via an elastically deformable member, such as a spring, and can be widened in the X direction so that the user can wear wearable apparatus 100 on his/her head. Temple 140 corresponds to a "wearing part" of the present disclosure.

As illustrated in FIGS. 2 and 3, attachment member 150 is a member attached to frame members 130 in order to bridge two lower parts 132 and is made of a rigid metal or other material. Attachment member 150 includes bridge part 151 and attached members 152.

Bridge part 151 is a part that is configured to extend in the X direction in order to bridge two lower parts 132 and is placed at a position on the positive side in the Z direction relative to two lens barrels 110.

Each attached member 152 is a part attached to lower part 132 inside lower part 132 and upper part 133 and is configured to extend from the end in the X direction of bridge part 151 to the negative side in the Z direction and then extend outward in the X direction (opposite to bridge part 151).

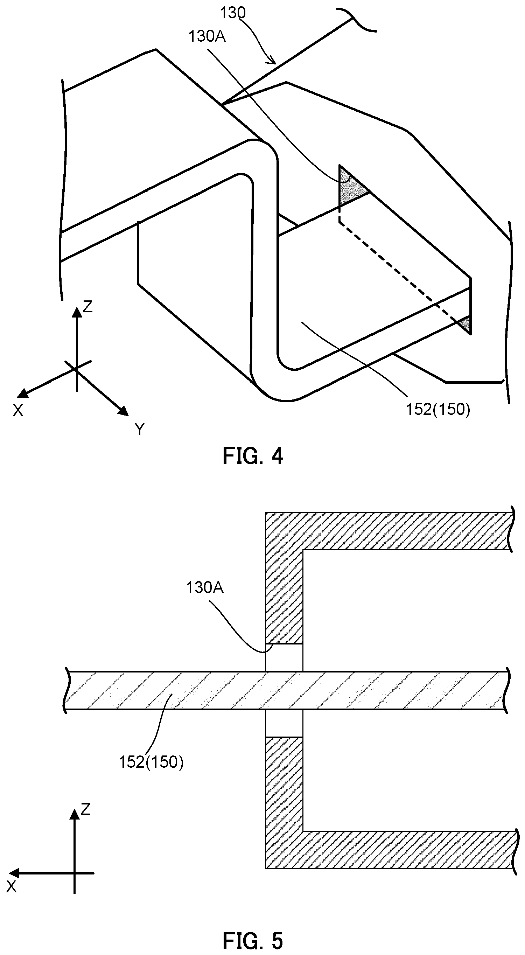

Further, as illustrated in FIG. 4, opening 130A is formed in a sidewall on an inner side in the X direction (on lens barrel section 110 side) of the casing formed by lower part 132 and upper part 133. Attachment member 150 is placed so that attached member 152 enters an inside of the casing through opening 130A. Further, as illustrated in FIG. 5, an edge part of opening 130A is spaced apart from attached member 152.

Further, as illustrated in FIG. 3, two attached members 152 on both sides in the X direction are equipped with imagers 160.

Imagers 160 are cameras for imaging an image and are provided respectively corresponding to the displays of lens barrels 110.

Each imager 160 is attached to the end part of corresponding attached member 152 on a negative side in the Y direction. Imager 160 is placed at a position overlapping with lower part 132 and upper part 133 of frame member 130 and is configured in a cylindrical shape.

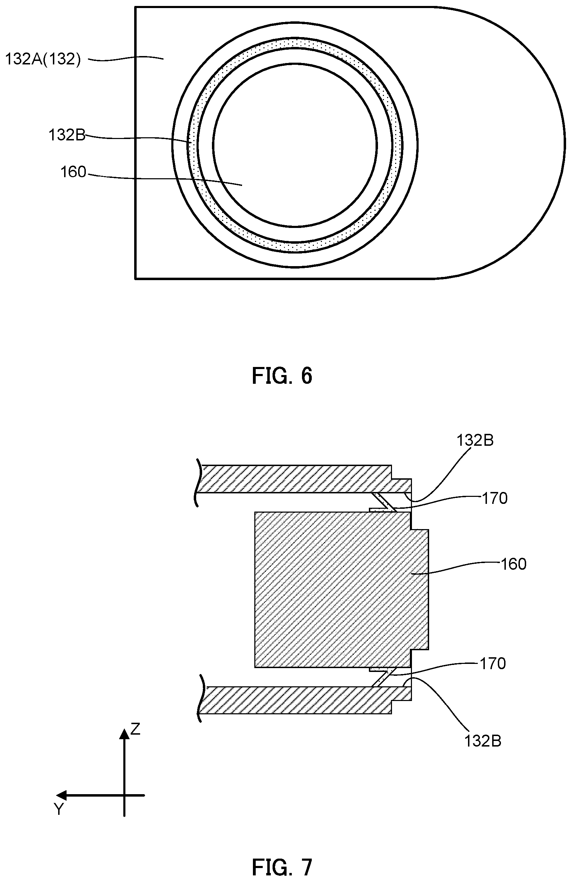

Further, as illustrated in FIG. 6, in sidewall 132A of the end of lower part 132 in the Y direction, opening 132B is formed to allow imager 160 to enter. Opening 132B is configured in a circular shape with a radius larger than an outer circumferential surface of imager 160. Imager 160 is placed such that a gap is formed in between with an edge of opening 132B.

Further, as illustrated in FIG. 7, sealing member 170 for closing the gap is provided between imager 160 and the edge of opening 132B. Sealing member 170 is provided along the entire outer circumference of imager 160, and can be made of any material, for example, felt and the like, as long as it can close the gap. Further, sealing member 170 is preferably an elastically deformable member, from the viewpoint of preventing force applied to frame member 130 from being transmitted to imager 160.

Further, as illustrated in FIG. 3, of two attached members 152, attached member 152 on the positive side in the X direction is equipped with motion sensor 180. Motion sensor 180 is, for example, an acceleration sensor, a gyro-sensor, or the like, and is placed at a position of the end of attached member 152 on the positive side in the X direction. Attached member 152 may be equipped with two or more different types of sensors (e.g., accelerometer and gyroscope), as motion sensors 180.

Next, an attachment structure in which attachment member 150 is attached to frame member 130 will be described in detail.

Attached member 152 has three through holes 152A, 152B, and 152C aligned in the Y direction and is attached to frame member 130 at three points of first through hole 152A, second through hole 152B, and third through hole 152C.

First through hole 152A is positioned at the end on the positive side in the Y direction of attached member 152, and third through hole 152C is positioned at the end on the negative side in the Y direction of attached member 152. Second through hole 152B is positioned between first through hole 152A and third through hole 152C in the Y direction.

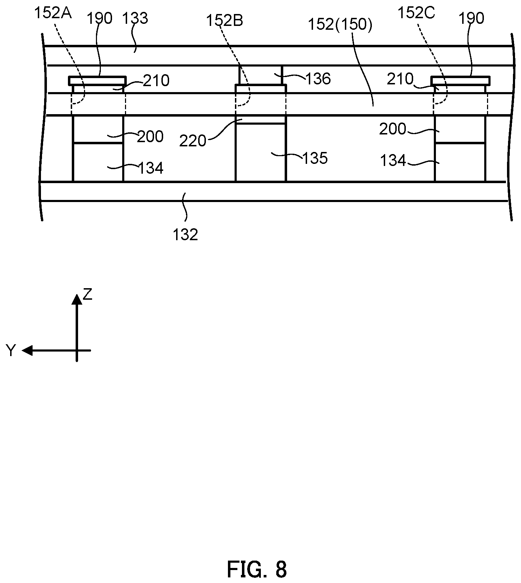

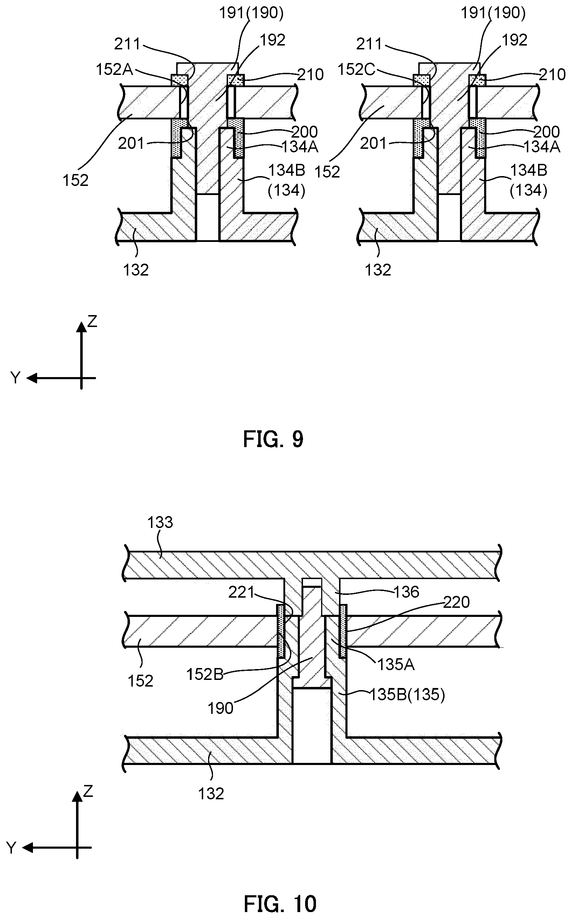

As illustrated in FIGS. 8 and 9, first protrusions 134, each of which has a screw hole into which screw 190 can be inserted from the positive side in the Z direction, are provided at the positions respectively corresponding to first through hole 152A and third through hole 152C in lower part 132 of frame member 130.

Each first protrusion 134 is configured in a cylindrical shape in which tip part 134A has a smaller diameter than that of non-tip part 134B.

Each of parts of attachment member 150 respectively corresponding to first through hole 152A and third through hole 152C is attached to frame member 130 (first protrusion 134) via first rubber member 200 and second rubber member 210.

First rubber member 200 has a bottomed cylindrical shape and is configured to fit into tip part 134A of first protrusion 134. The bottom part of first rubber member 200 has hole 201 for a screw to pass through.

First rubber member 200 is fitted into tip part 134A of first protrusion 134 and is thus placed such that the bottom part is pinched between attachment member 150 and first protrusion 134 on the negative side in the Z direction of attachment member 150.

Second rubber member 210 has ring shape and has hole 211 for screw 190 to pass through.

Second rubber member 210 is placed to be pinched between attachment member 150 and head part 191 of screw 190 on the positive side in the Z direction of attachment member 150.

That is, attachment member 150 is attached to be not in contact with frame member 130 at attachment points respectively corresponding to first through hole 152A and third through hole 152C. This causes the rubber members to be arranged on the both sides in the Z direction of attachment member 150, so that even when force in the Z direction is applied to frame member 130, the rubber members absorb the force in the Z direction.

Incidentally, diameters of first through hole 152A and third through hole 152C are larger than a diameter of component 192 of screw 190, which corresponds to attachment member 150.

This prevents screw 190 and attachment member 150 from being brought in contact with each other even when force parallel to an XY plane is applied to frame member 130.

Further, as illustrated in FIGS. 8 and 10, second protrusion 135, which has a screw hole into which a screw can be inserted from the negative side in the Z direction, is provided at the position corresponding to second through hole 152B in lower part 132 of frame member 130. Further, third protrusion 136, which has a screw hole into which screw 190 can be inserted from the negative side in the Z direction, is provided at the position corresponding to second through hole 152B in upper part 133 of frame member 130.

Second protrusion 135 is configured in a cylindrical shape in which tip part 135A has a smaller diameter than that of non-tip part 135B. Tip part 135A of second protrusion 135 is brought into contact with third protrusion 136 when upper part 133 is attached to lower part 132. A diameter of third protrusion 136 is the same as the diameter of tip part 135A of second protrusion 135.

A part of attachment member 150 corresponding to second through hole 152B is attached to frame member 130 (second protrusion 135 and third protrusion 136) via third rubber member 220.

Third rubber member 220 has a cylindrical shape and has hole 221 with a diameter that can be fitted into second protrusion 135 and third protrusion 136.

Further, a diameter of second through hole 152B is greater than the diameter of tip part 135A of second protrusion 135 and the diameter of third protrusion 136. Second through hole 152B is placed at a position corresponding to tip part 135A of second protrusion 135 when attachment member 150 is attached to frame member 130.

Third rubber member 220 is fitted into tip part 135A of second protrusion 135 and third protrusion 136, and is thus placed to be pinched between second through hole 152B and tip part 135A of second protrusion 135 in the XY plane.

That is, attachment member 150 is attached to be not in contact with frame member 130 at an attachment point corresponding to second through hole 152B. Thus, even when force parallel to the XY plane is applied to frame member 130, third rubber member 220 absorbs the force parallel to the XY plane.

According to the present embodiment configured as above, attachment member 150 is attached to frame member 130 via rubber members. To be more specific, at the parts of first through hole 152A and third through hole 152C of attachment member 150, first rubber member 200 and second rubber member 210 pinch attachment member 150 from both sides in the Z direction; therefore, even when force in the Z direction is applied to frame member 130, first rubber members 200 and second rubber member 210 absorb the force in the Z direction.

Further, at the part of second through hole 152B of attachment member 150, third rubber member 220 is interposed between second protrusion 135 of frame member 130 and attachment member 150; therefore, even when force parallel to the XY plane is applied to frame member 130, third rubber member 220 absorbs the force parallel to the XY plane.

Further, the diameters of first through hole 152A and third through hole 152C are larger than the diameter of component 192 of screw 190 corresponding to attachment member 150; therefore, even when force parallel to the XY plane is applied to frame member 130, it is possible to prevent screw 190 and attachment member 150 from being brought in contact with each other.

From the above, in the present embodiment, attachment member 150 is attached to frame member 130 to be not in contact with frame member 130 at the attachment points.

In wearable apparatus 100, for example, an action of widening temples 140 is performed when the user wears wearable apparatus 100 on his/her head or adjusts the position of wearable apparatus 100 on the head, which may cause an external force to be applied to frame member 130. In addition, an action of moving lens barrels 110 toward the X direction is performed when the user adjusts the positions of lens barrels 110 in the X direction, which may cause an external force to be applied to frame member 130.

In such a case, for example, when an imager and a motion sensor are attached to a frame member, a relative positional relationship between the imager and the motion sensor is misaligned due to force applied to the frame member, potentially affecting a content of an image visible to the user in the wearable apparatus.

In contrast, in the present embodiment, attachment member 150 equipped with imagers 160 and motion sensor 180 is attached to frame member 130 to be not in contact with frame member 130, i.e. is attached to frame member 130 in an unconnected manner, thereby suppressing transmission of force to attachment member 150 even when the force is applied to frame member 130.

As a result, it is possible to suppress the misalignment of the relative positional relationship between imagers 160 and motion sensor 180, thereby suppressing an effect on a content of an image visible to the user due to force applied to frame member 130 in wearable apparatus 100.

Further, since the force applied to frame member 130 has no effect on the content of the image visible to the user, temple 140 and frame member 130 can be flexibly connected with each other. In a case where a temple and a frame member are not flexibly connected with each other, the user is likely to feel uncomfortable because the temples tighten his/her head.

In contrast, in the present embodiment, temple 140 and frame member 130 are flexibly connected with each other, which suppresses the discomfort that the user may feel due to temples 140 being attached to the head, thus making it easier for the user to immerse in an image displayed in wearable apparatus 100.

Further, since rubber members are arranged between frame member 130 and attachment member 150, the rubber members can effectively absorb force applied to frame member 130.

Further, since the gap is formed between the edge of opening 132B in the part of frame member 130 where imager 160 is placed, and imager 160, it is made possible to prevent the edge of opening 132B and imager 160 from being brought into contact with each other, thereby preventing transmission of the force applied to frame member 130.

Further, since sealing member 170 is provided in the gap between the edge of opening 132B and imager 160, it is made possible to prevent dust or the like from entering the inside of frame member 130 through the gap. Further, when frame member 130 is subjected to force and thus deforms, sealing member 170 functions as a buffer material, thus making it possible to further prevent the force applied to frame member 130 from being transmitted to attachment member 150.

Further, since the edge of opening 130A of frame member 130 and attachment member 150 are spaced apart from each other, it is made possible to further prevent the force applied to frame member 130 from being transmitted to attachment member 150.

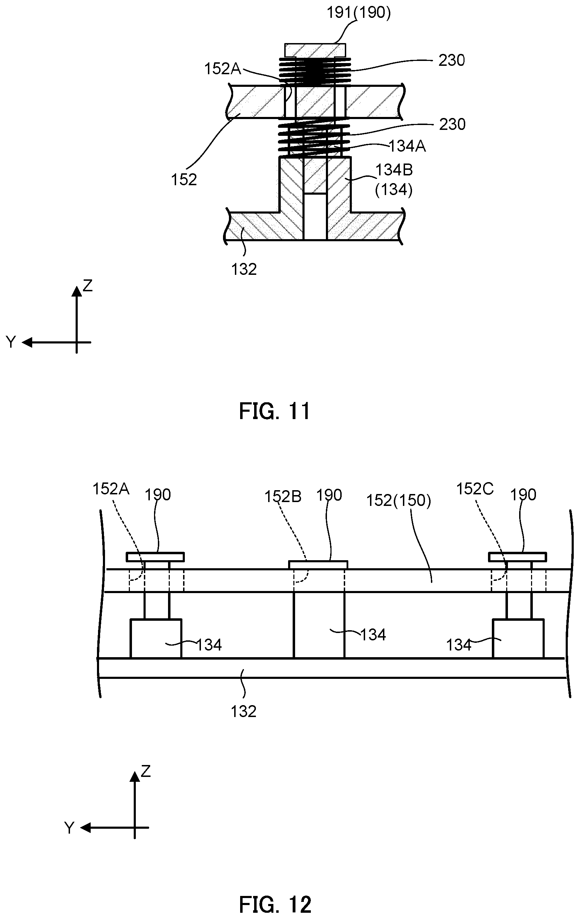

In the above embodiment, attachment member 150 is connected to frame member 130 via rubber members, but the present disclosure is not limited to this case. For example, as illustrated in FIG. 11, attachment member 150 may be connected to frame member 130 via spring members 230.

In this configuration, spring members 230 are respectively provided at two positions: between head part 191 of screw 190 and attached member 152; and between tip part 134A of first protrusion 134 and attached member 152.

Each spring member 230 energizes attached member 152 toward the Z direction, and attached member 152 (attachment member 150) is thereby attached. Even in such a configuration, attachment member 150 is not in contact with frame member 130 at an attachment point, i.e., attachment member 150 is attached to frame member 130 in an unconnected manner; therefore, even when force in the Z direction is applied to frame member 130, spring members 230 can absorb the force in the Z direction, for example. As a result, it is possible to prevent the force applied to frame member 130 from being transmitted to attachment member 150.

Additionally, in the above embodiment, attachment member 150 is connected to frame member 130 via a member capable of absorbing force applied to frame member 130, but the present disclosure is not limited to this, and it is not necessary to use the aforementioned member.

For example, as illustrated in FIG. 12, one of the parts corresponding to three through holes 152A, 152B, and 152C of attachment member 150 may be fixed, while the other two are brought into non-contact, that is, may be unconnected to the frame member. Incidentally, FIG. 12 illustrates an example in which first protrusion 134 is provided at the part corresponding to second through hole 152B.

For example, an example is illustrated in which the part corresponding to second through hole 152B of attachment member 150 is fixed with screw 190. In this case, screws 190 pass through also the parts corresponding to first through hole 152A and third through hole 152C of attachment member 150, but the edges of through holes and screws 190 are spaced apart from one another.

In such a configuration, force applied to frame member 130 is transmitted to attachment member 150 at the part corresponding to second through hole 152B, but the force applied to frame member 130 is not transmitted at the parts corresponding to the other through holes; therefore, it is made possible to reduce the transmission of the force applied to frame member 130 to attachment member 150 as a whole.

In addition, in the above embodiment, the frame members respectively support the two lens barrels movably, but the present disclosure is not limited to this, and the two lens barrels may be fixed to the frame members.

Further, in the above embodiment, the two imagers are provided, but the present disclosure is not limited to this, and a configuration equipped with one imager is possible. In this case, for example, the imager may be provided at a position correspondingly between the two lens barrels. Further, three or more imagers may be provided.

Further, in the above embodiment, sealing member 170 is provided in the gap between imager 160 and the edge of opening 132B of frame member 130, but the present disclosure is not limited to this, and sealing member 170 need not be provided.

Further, in the above embodiment, the gap is formed between imager 160 and the edge of opening 132B of frame member 130, but the present disclosure is not limited to this, and the gap need not be provided. However, from the viewpoint of preventing the force applied to frame member 130 from being transmitted to attachment member 150, the gap is preferably formed.

Further, in the above embodiment, the edge part of opening 130A of frame member 130 is spaced apart from attached member 152 of attachment member 150, but the present disclosure is not limited to this, and the edge part of opening 130A and attachment member 150 need not be spaced apart from each other. However, from the viewpoint of preventing the force applied to frame member 130 from being transmitted to attachment member 150, it is preferable that the edge part of opening 130A and attachment member 150 are spaced apart from each other.

Further, the above embodiment has described, as an example, the wearable apparatus capable of displaying an image at a cover to the user, but the present disclosure is not limited to this, and a retinal-projection-type wearable apparatus capable of projecting an image to retinas of the user is possible. In this case, an attached member at each of ends in the X direction may be equipped with an irradiation device or the like, and the cover may be equipped with a mirror to reflect a laser scanned from the irradiation device and then project the laser onto the retinas of the user.

Further, in the above embodiment, the lens barrels (covers) and the frame members are units separate from each other, but the present disclosure is not limited to this, and the covers and the frame members may be integrally configured with each other.

Further, in the above embodiment, the covers provided in a glasses-type shape, with one cover corresponding to each of the eyes of user, but the present disclosure is not limited to this, and, for example, a goggle-type with a single cover may also be used.

Further, in the above embodiment, the temple (wearing part) and the frame member are units separate from each other, but the present disclosure is not limited to this, and the wearing part and the frame member may be integrally configured with each other.

The embodiment described above is merely an example of specific implementation of the present disclosure, and the technical scope of the present disclosure should not be restrictively interpreted by this embodiment. That is, the present disclosure may be implemented in various forms without departing from the spirit thereof or the major features thereof.

The disclosure of Japanese Patent Application No. 2022-154902, filed on September 28, 2022, including the specification, drawings and abstract, is incorporated herein by reference in its entirety.

### Industrial Applicability

A wearable apparatus of the present disclosure is useful as a wearable apparatus capable of suppressing an effect on a content of an image visible to a user due to an external force transmitted from a frame member.

### Reference Signs List

100 Wearable apparatus
110 Lens barrel
111 Supported part
120 Eye cap
130 Frame member
130A Opening
131 Supporter
132 Lower part
132A Side wall
132B Opening
133 Upper part
134 First protrusion
134A Tip part
134B Non-tip part
135 Second protrusion
135A Tip part
135B Non-tip part
136 Third protrusion
140 Temple
150 Attachment member
151 Bridge part
152 Attached member
152A First through hole
152B Second through hole
152C Third through hole
160 Imager
170 Sealing member
180 Motion sensor
190 Screw
200 First rubber member
201 Hole
210 Second rubber member
211 Hole
220 Third rubber member
221 Hole
230 Spring member

## Claims

1. A wearable apparatus, comprising:
a frame member that includes two covers, a supporter, and a wearing part, the two covers being arranged side by side at positions respectively corresponding to eyes of a user, the two covers being provided for displaying an image to the user, the supporter supporting each of the two covers movably in a direction in which the two covers are arranged, the wearing part being worn on a head of the user; and
an attachment member to which an imager that images an image and a motion sensor are attached,
wherein:
the supporter is fixed to the frame member, and
the attachment member is attached to the frame member such that the attachment member has at least a part that is not in contact with the frame member at an attachment point.

2. The wearable apparatus according to claim 1, wherein the wearing part and the frame member are flexibly connected with each other.

3. The wearable apparatus according to claim 1, further comprising a rubber member that is provided between the frame member and the attachment member.

4. The wearable apparatus according to claim 1, further comprising a spring member that is provided between the frame member and the attachment member.

5. The wearable apparatus according to claim 1, wherein:
the imager is placed at a position overlapping with the frame member,
the frame member has an opening that allows the imager to enter; and
the imager is placed at the position overlapping with the frame member such that a gap is formed between the opening and the imager.

6. The wearable apparatus according to claim 5, further comprising a sealing member that is provided to close the gap.

7. The wearable apparatus according to claim 1, wherein:
a plurality of the frame members include casings that are placed on sides of the two covers, respectively, each of the casings having an opening, and
the attachment member includes a bridge that bridges the casings on the sides thereof, respectively, and an attached member that is attached to an inside of at least one of the casings through the opening from an end of the bridge, wherein
an edge of the opening is spaced apart from the attachment member.
